(19) Europäisches Patentamt / European Patent Office / Office européen des brevets

(11) **EP 2 746 591 B1**

(12) **EUROPEAN PATENT SPECIFICATION**

(45) Date of publication and mention
of the grant of the patent:
**08.07.2020 Bulletin 2020/28**

(51) Int Cl.:
***B30B 15/16*** *(2006.01)*   ***F15B 11/036*** *(2006.01)*
***F15B 19/00*** *(2006.01)*   ***G01N 3/10*** *(2006.01)*
***G01N 3/36*** *(2006.01)*

(21) Application number: **12199295.2**

(22) Date of filing: **21.12.2012**

(54) **Hydraulic drive for fatigue tests and method of controlling the hydraulic drive**

Hydraulikantrieb für Ermüdungsprüfungen und Verfahren zur Steuerung des Hydraulikantriebs

Commande hydraulique pour tests de fatigue et procédé de contrôle de la commande hydraulique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietors:
• **Robert Bosch GmbH
70442 Stuttgart (DE)**
• **The European Union,
represented by the European Commission
1049 Brussels (BE)**

(72) Inventors:
• **Palopoli, Andrea Maria
20131 Milano (IT)**
• **Magonette, Georges
21023, Besozzo (IT)**
• **Fazzari, Bruno
28100 Novara (IT)**
• **Viaccoz, Bernard
21023 Besozzo (IT)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
EP-A2- 2 497 958     CN-A- 102 261 359
CN-U- 202 486 004    GB-A- 963 502
US-A- 3 575 045      US-A- 3 731 592
US-A- 4 630 442      US-A- 5 435 228

**Description**

The invention is based on a hydraulic drive for load/fatigue tests and a method of controlling said hydraulic drive.

From the state of the art fatigue tests for large structures are known for example from the field of civil engineering, such as steel ropes or large springs. These tests have a high power requirement, as a large number of cyclic loadings have to be applied to the structure to be tested by a hydraulic drive, a respective application being performed with high forces. For instance, for a fatigue test two million cyclic loadings can be carried out, wherein the force applied can vary from 8 to 10 MN. In known test rigs the cyclic load is generated by conventional servo-hydraulic linear actuators which are differential cylinders, for instance. The hydraulic power required for this purpose is provided by high-capacity pump systems.

A fatigue test is a method of determining the behavior of materials under fluctuating loads. Typically, a specified mean load and an alternating load are applied to the structure and the number of cycles required to produce failure (fatigue life) is recorded.

Usually a servo-hydraulic test rig is employed in these tests. In this case a single servo-actuator is used to generate the mean load as well as the alternating load applied to the tested structure. If a high mean load is needed, as this is frequently the case when civil structure components are being tested, a large size servo-actuator is required to sustain the static component of the cyclic load. As said actuator is also used to generate the dynamic component of the load, an important oil flow (and consequently a large amount of energy) is needed to sustain the test.

US3731592 A, US5435228 A and CN202486004 U disclose hydraulic fatigue testing devices comprising multiple piston chambers.

Compared to this, the object underlying the invention is to provide a hydraulic drive for fatigue tests having low power requirement and/or being configured in a simple manner in terms of devices. Moreover the object underlying the invention is to provide a simpler method of controlling a hydraulic drive for fatigue tests.

The object is achieved as regards the hydraulic drive according to the features of claim 1, and as regards the method according to the features of claim 9.

Other advantageous developments of the invention are the subject matter of further subclaims.

In accordance with the invention, a hydraulic drive for fatigue tests comprising a multiple cylinder is provided. This can be a cylinder including two or more pistons to which pressure medium can be especially separately applied, wherein thus as multiple cylinders a double cylinder or tandem cylinder can be provided, for example. According to the invention, the multiple cylinder includes at least two pistons substantially arranged in parallel to each other and fixedly connected to each other.

The pistons are arranged, for instance, coaxially in line or at a parallel distance from each other. When they are arranged in line, they can be interconnected via a piston rod. The first piston is controlled by a first hydraulic partial control and the second piston is controlled by a second hydraulic partial control. According to the invention, the first partial control is adapted to sustain a static load and the second partial control is adapted to control a dynamic load.

This solution has the advantage that a piston thus serves for applying the static load to a component part to be tested and the other piston then applies a dynamic load to the component part to be tested in a way superimposing the static load. It has turned out that in this way definitely less energy is required for the fatigue test. A minimum of the dynamic load preferably is higher than or equal to the static load.

In a further configuration of the invention, the piston for sustaining the static load has a larger diameter than the piston used for the dynamic load. For instance, the piston for sustaining the static load is approximately three times as large as the other piston. Thus, the large piston results in a high static load with a comparatively low pressure. Although more pressure medium is applied to the large piston, this results practically in no higher power requirement of the hydraulic drive, however, because the application is substantially constant.

According to the invention, a respective piston delimits two cylinder chambers. The first cylinder chamber delimited by the first piston is adapted to be connected to a high pressure source by the first partial control to sustain the static load. The cylinder chambers delimited by the second piston in turn are alternately connected to the said or a further high pressure source and a pressure medium sink, for example a tank, by the second partial control for controlling the dynamic load.

Preferably, the first cylinder chamber delimited by the first piston is connected to a hydraulic reservoir. It is also imaginable to provide plural hydraulic reservoirs arranged hydraulically in parallel. Thus, when using the hydraulic drive hardly any additional pressure medium has to be fed, for instance by a hydraulic pump, because the hydraulic reservoir serves as pressure medium buffer. It can merely be necessary to compensate leakage by additional pressure medium. The hydraulic reservoir is preferably configured so that the static load substantially can be kept constant, wherein it has turned out that a deviation of e.g. 2 to 3 % still is acceptable. The second cylinder chamber delimited by the first piston then can be connected to a pressure medium sink, for example. Furthermore, it is possible to protect the hydraulic reservoir via a pressure limiting valve.

A piston rod on which the pistons are arranged in line serves for applying force to the object to be tested. In this case, a drive casing of the hydraulic drive can be fixedly arranged. It would also be imaginable to apply force to the object to be tested via the drive casing and, on the other hand, to fixedly support the piston rod.

Advantageously, the piston serving for sustaining the static load is arranged, viewed in the axial direction, between the piston used for the dynamic load and the object to be tested. The load transfer from the piston applying the static load to the object to be tested thus has a comparatively short force path.

In a simple manner in terms of device, an especially continuously variable control valve can be provided for the second partial control so as to control the dynamic load. Then the control valve is adapted to connect the cylinder chambers delimited by the second piston alternately to the high-pressure source or to the pressure medium sink, for instance a tank.

The control valve includes, for instance, two operating ports each being connectable to a respective cylinder chamber delimited by the second piston, a pressure port connected to the high-pressure source and a tank port connected to the pressure medium sink. At first shift positions of a valve slide of the control valve the first operating port then can be connected to the pressure port and the second operating port can be connected to the tank port. At second shift positions, inversely the first operating port is preferably connected to the tank port and the second operating port is connected to the pressure port. In a further configuration of the control valve the valve slide thereof is spring-centered at a central position at which all connections are separated from each other. The valve slide is operable via an electrical actuator or hydraulically, for instance.

In a preferred development of the hydraulic drive an interconnection valve can be provided by which the cylinder chambers delimited by the second piston are connectable in a fluidic manner. In terms of energy, a fluidic connection of said cylinder chambers is advantageous in particular when the piston serving for the static load "is loaded".

The interconnection valve can be in the form of a shift valve. At a first shift position a valve body can separate the pressure medium communication between the cylinder chambers and can establish the same at a second shift position. It is further possible to apply a spring force of a valve spring to the valve slide at a first shift position. An electrical actuator can be used, for instance, to operate the valve slide or else the valve slide is operated hydraulically.

According to the invention, the first cylinder chamber delimited by the first piston is adapted to be connected to the high-pressure source via a directional control valve. Thus, pressure medium can be guided from the high-pressure source to the first piston on demand, for instance when loading the first piston or when a leakage occurs.

The directional control valve is continuously variable and includes an operating port and a pressure port. A valve slide then separates the connections in closed positions and connects them in open positions. The valve slide is operated via an electrical actuator or hydraulically, for example. In the direction of the closed positions a spring force of a valve spring can be applied to the valve slide.

It is imaginable to provide another control valve between the directional control valve and the multiple cylinder. Such control valve can be configured, for instance, so that at a first shift position it connects the first cylinder chamber delimited by the first piston to the directional control valve and the high-pressure source, resp., and connects the second cylinder chamber delimited by the first piston to the pressure medium sink and at a second shift position inversely connects the second cylinder chamber to the high-pressure source and the directional control valve, resp., and connects the first cylinder chamber to the pressure medium sink. This permits to apply pressure medium to the first piston from both sides, whereby the hydraulic drive in turn can be used in a bidirectional manner.

The high-pressure source preferably is a hydraulic machine in the form of a hydraulic pump. The hydraulic pump is configured, for instance, as a fixed displacement pump or as a variable hydraulic pump. If the hydraulic pump is a variable hydraulic pump, it is imaginable to provide a pressure regulator so as to keep a pump pressure approximately constant. If the hydraulic pump is a fixed displacement pump, it is imaginable to provide a pressure limiting valve downstream of the hydraulic pump.

In a further configuration of the invention, downstream of the high-pressure source a check valve opening in the flow direction of the pressure medium toward the piston can be provided to sustain the load. This check valve is disposed, for instance, between the high-pressure source and the control or directional control valve in the pressure medium flow path.

The control valve is force-controlled or path-controlled, for example, wherein the control valve is controlled by a controller that effects force feedback control and/or pressure feedback control and/or path feedback control of the multiple cylinder. If it is path-controlled, it changes from one shift position to the other upon reaching a predetermined displacement of the pistons. In order to detect the displacement a displacement measuring system can be provided which is associated with the piston rod, for instance. If it is force-controlled, it can change between the shift positions when e.g. a predetermined pressure is prevailing in the cylinder chambers.

In accordance with the invention, a multiple cylinder is employed for load tests and/or material fatigue tests and/or fatigue tests. It includes two pistons arranged substantially in parallel and fixedly connected to each other. The multiple cylinder can be designed in accordance with the afore-described features. Utilization of such multiple cylinder for the afore-mentioned purpose of use results in fatigue tests of low power requirement.

A method according to the invention for controlling the hydraulic drive comprises the following steps:

- Applying pressure medium to the first piston to produce and sustain the static load;

- Simultaneously or subsequently applying pressure medium to the second piston alternately in opposite directions so that a dynamic load is generated via the same. The alternate application is carried out at 2 Hz, for instance.

Hereinafter preferred embodiments of the invention are explained in detail by way of schematic drawings, in which:

Figure 1 shows a schematic hydraulic circuit diagram of a hydraulic drive according to the invention in accordance with a first embodiment,
Figure 2 shows a cylinder displacement-time diagram for the hydraulic drive of Figure 1,
Figure 3 shows a hydraulic energy-time diagram for the hydraulic drive of Figure 1,
Figure 4 shows a deformation energy-time diagram for the hydraulic drive of Figure 1,
Figure 5 shows a multiple cylinder according to the invention in longitudinal section,
Figure 6 shows a schematic hydraulic circuit diagram of the hydraulic drive according to the invention in accordance with a third embodiment and
Figure 7 shows a schematic hydraulic circuit diagram of the hydraulic drive according to the invention in accordance with a further embodiment.

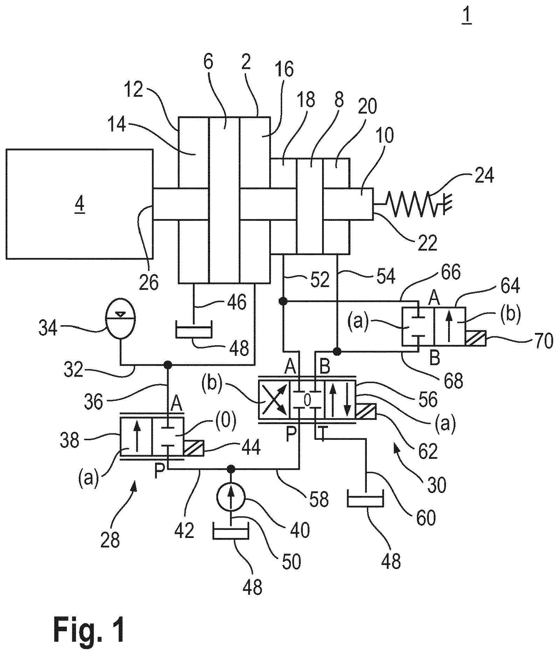

In accordance with Figure 1, the hydraulic drive 1 is illustrated to comprise a multiple cylinder in the form of a double cylinder 2. The double cylinder 2 serves for applying a static and a dynamic load to a component part 4 for a fatigue test.

The double cylinder 2 comprises a first piston 6 and a second piston 8. They are arranged on a joint piston rod 10 successively in line and approximately coaxially with respect to each other. The first piston 6 has a larger diameter than the second piston 8 and is disposed between the second piston 8 and the component part 4. The first piston 6 delimits, together with a casing 12 of the double cylinder 2, first and second control chambers 16 and 14. The second piston 8 delimits in the casing 12 a first control chamber 18 arranged adjacent to the control chamber 16 and a second control chamber 20. The piston rod 10 completely penetrates the control chambers 14 to 20, the latter thereby being configured as annular chambers. In order to stabilize the piston rod 10 in the unpressurized state the spring force of a spring 24 is applied to the same via its end face 22 facing away from the component part 4. The piston rod 10 acts on the component part 4 by its end face 26 facing away from the end face 22.

First and second partial controls 28 and 30 are provided for controlling the double cylinder 2. The first partial control 28 includes a pressure line 32 connected to the first control chamber 16 delimited by the first piston 6 which is connected to a hydraulic reservoir 34. A branch line 36 connected to an operating port A of a directional control valve 38 branches off the pressure line 32. This serves for controlling a pressure medium communication between the first control chamber 16 and a hydraulic machine 40 in the form of a fixed displacement pump. The latter is connected to a pressure port P of the directional control valve 38 by a pump line 42. The directional control valve 38 is continuously variable and is in the form of a 2/2 directional control valve. At first shift positions 0 a valve slide of the directional control valve 38 blocks the pressure medium communication between the operating port A and the pressure port P and communicates said two ports at second shift positions a. The valve slide of the directional control valve 38 is operable via an electrical actuator 44. The second control chamber 14 that is delimited by the first piston 6 is connected to a pressure medium sink in the form of a tank 48 via a tank line 46. Thus pressure medium can be applied to the first piston 6 via the first control chamber 16 by the fact that the valve slide of the directional control valve 38 is at its shift positions a and the fixed displacement pump 42 conveys pressure medium from the tank 48 via a tank line 50 into the pump line 42 and from there further into the pressure line 32. If the component part 4 is loaded with a predetermined static load via the piston rod 10 and the first piston 6, the directional control valve 38 can close, thus the hydraulic reservoir 34 serving as a buffer when the piston 6 is displaced. If the static load falls below the desired value, pressure medium can be fed to the first control chamber 16 via the directional control valve 38 at any time.

Each of the control chambers 18 and 20 delimited by the second piston 8 is connected to a pressure line 52 or 54, respectively. The pressure lines 52 and 54 in turn are alternately connectable to the fixed displacement pump 40 or the tank 48 via a control valve 56 in the form of a continuously variable 4/3 directional control valve. For this purpose, the pressure lines 52 and 54 are connected to operating ports A and B of the control valve 56. The control valve 56 further includes a pressure port P connected to the pump line 42 via a pump line 58. Via a tank port T the control valve 46 is connected to a tank line 60 opening into the tank 48. At a central position 0 of a valve slide of the control valve 56 the operating ports A, B, the pressure port P and the tank port T are separated from each other. In the direction of shift positions a, the valve slide opens a pressure medium communication between the operating port A and the pressure port P - and thus between the first control chamber 18 and the hydraulic machine 40 - and opens a pressure medium communication between the pressure port P and the tank port T - and thus between the second control chamber 20 and the tank 48. In the direction of second shift positions b, the valve slide communicates the operating port A to the tank port T and the operating port B to the pressure port P, thereby the second control chamber 20 being communicated to the hydraulic machine 40 and the first control chamber 18 being communicated to the tank 48.

Thus pressure medium can be applied to the piston 8 alternatively via its control chambers 18 and 20, whereby in turn a dynamic load in addition to the static load acts on the component part 4. In this case the control valve 56 is operable via an electrical actuator 62.

Between the pressure lines 52 and 54 an interconnection valve 64 is provided in the form of a 2/2 directional control valve. The interconnection valve is connected by a first communicating line 66 to the pressure line 52 and by a second communicating line 68 to the pressure line 54. The communicating lines 66 and 68 in turn are connected to each of the operating ports A and B of the interconnection valve 64. At a first shift position a, a valve slide of the interconnection valve 64 separates the operating ports A and B from each other and connects them at a second shift position b. The interconnection valve 64 is operated via an electrical actuator 70.

For example, for a fatigue test the double cylinder 2 has a structural stiffness of 70 kN/mm. The mean structural displacement of the piston rod 10 for reaching the static load amounts e.g. to approx. 27 mm. An alternating displacement of the piston rod 10 for the dynamic load can be, for instance, +/- 1 mm. The alternating load frequency provided can be 2 Hz. It is imaginable to provide a maximum of 1 % as displacement control error.

For the fatigue test at the start the valve slide of the directional control valve 38 is brought into the shift positions a, whereby pressure medium is applied to the first control chamber 16 until the static load is reached. Subsequently, the valve slide of the directional control valve 38 is brought into the closed positions 0. To apply the dynamic load to the component part 4 the valve slide of the control valve 56 is moved between the shift positions a and b, thereby pressure medium being alternately guided and discharged to the control chambers 18 and 20. Thus the static load can be substantially sustained via a large piston 6 without supplying further pressure medium via the hydraulic machine 40. For the dynamic load it is merely necessary to alternately apply pressure medium to the smaller piston 8. Consequently, the dynamic load acting on the component part 4 is increased via the control valve 56 until it reaches a desired maximum load and then is reduced to a desired minimum load, the minimum load usually being somewhat higher than the static load. Usually this is repeated at a high number, for instance at two million repetitions.

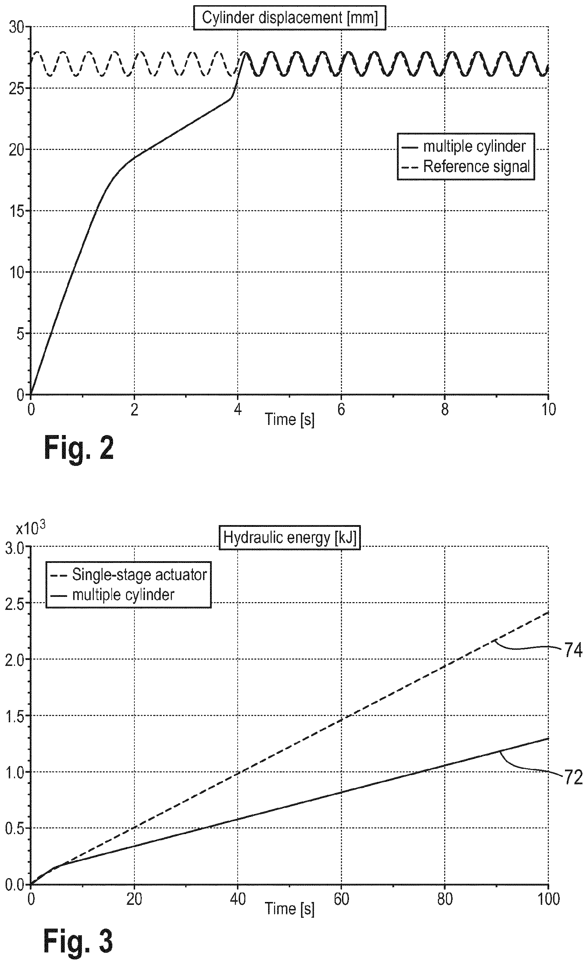

According to Figure 2, the displacement of the piston rod 10 in a fatigue test is exemplified. At the start of the test, the piston rod 10 is displaced until the desired static load is reached, which in the present example takes place at approx. 27 mm. Based on said displacement path the dynamic load is applied to the component part 4, the piston rod 10 being displaced at approx. +/- 1mm.

Figure 3 illustrates the consumption of hydraulic energy $E_{tot}$ in response to time of the double cylinder according to the invention by way of the curve 72 and of a simple state-of-the-art cylinder, especially a differential cylinder, for comparison by way of the curve 74. $E_{tot}$ (the energy absorbed during a test when the stationary state is reached; transient exhausted) is given by the formula:

$$E_{tot} = \int Q(t)p(t)dt \; ;$$

where Q(t) is the flow rate and *p(t)* is the pressure.

The results depicted in Figure 3 illustrate the trend of the energy absorbed over time during a test. The "classic configuration" (with single-stage actuators) as well as the double cylinder is considered. This plot points out the benefit of utilizing the double cylinder. This is fundamental considering that a fatigue test in general takes very long periods of time.

The mean $E_{tot}$ amounts, for instance, to 24.1 kW for the single-stage actuator and amounts to 12.4 kW for the double cylinder.

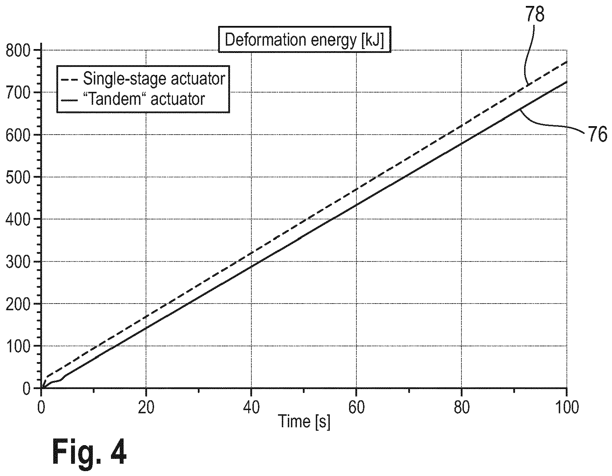

Figure 4 illustrates the deformation energy $E_{def}$ of the double cylinder 2 by way of the curve 76. Compared to that, the deformation energy $E_{def}$ of a state-of-the-art single-stage actuator is shown by way of the curve 78. The deformation energy is given by: $E_{def} = \int k \, x \, \dot{x} dt$ with $\dot{x} \geq 0$ It is evident that in the case of the double cylinder 2 the deformation energy $E_{def}$ is definitely lower compared to the state of the art. The mean deformation energy for a state-of-the-art single-stage actuator amounts e.g. to 7.55 kW and for the double cylinder 2 according to the invention it amounts to 7.35 kW.

Based on the hydraulic energy $E_{tot}$ and the deformation energy $E_{def}$ the steady state efficiency can be calculated:
$$\eta = \frac{E_{def}}{E_{tot}}$$
The steady state efficiency amounts to 32% for the state-of-the-art single-state actuator and to 58.9 % for the double cylinder 2 according to the invention.

Furthermore additional analysis in the frequency domain assigned to the double cylinder a frequency bandwidth that is nearly 2.5 times larger than that of the classic configuration. As a consequence, the disturbances are rejected with higher efficiency by reducing the error by about five times.

Hereinafter several technical specifications for the hydraulic drive 1 are listed by way of example. A moved mass of the first piston 6 of Figure 1 for instance can be 200 kg and that of the second piston 8 can be 100 kg. A piston diameter of the first piston 6 amounts to e.g. 500 mm and that of the second piston 8 amounts to e.g. 350 mm. A diameter of the piston rod 10 can be 200 mm, for example. The total piston stroke for respective pistons 6 and 8 can be provided to be 300 mm, a piston zero position then being approx. 150 mm. A viscous coefficient of friction of the pistons 6 and 8 preferably amounts to 1 Ns/mm. An internal coefficient of leakage oil can be 0,005 l/min/Bar for the first piston 6 and can be 0.05 l/min/Bar for the piston 8. The hydraulic reservoir for example exhibits a storage volume of 20 l and can be

provided for a storage pressure from e.g. 40 to 160 Bars or from 50 to 210 Bars, a maximum storage pressure preferably amounting to 280 Bars. The Kappa value for the hydraulic reservoir 34 can be provided to be 1.4. A possible nominal flow for the control valve 56 is 30 l/min and for the directional control valve 38 is 50 l/min.

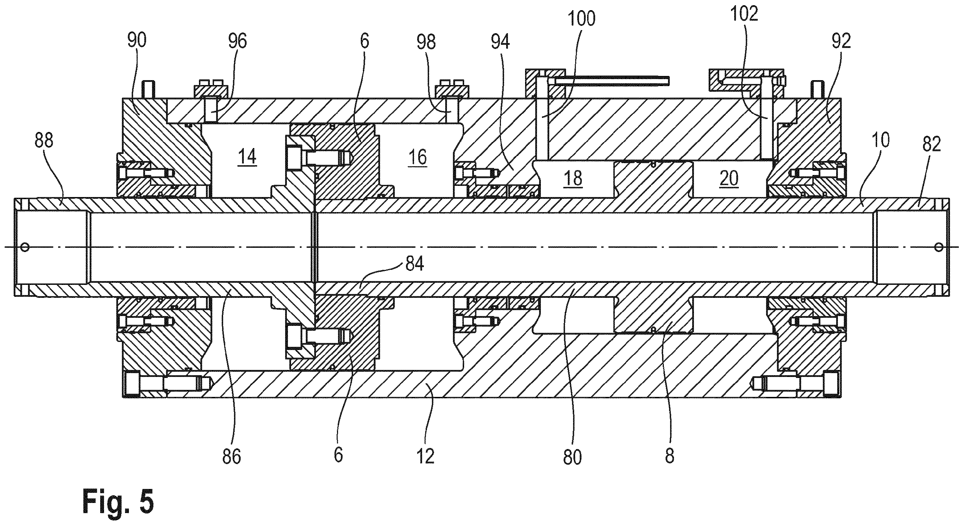

According to the longitudinal section of Figure 5, the piston rod 10 is designed to be in two parts. At a first portion 80 the second piston 8 is integrally formed. The first portion 80 of the piston rod 10 completely penetrates the control chambers 18 and 20 and projects from the casing 12 of the double cylinder 2 with an end portion 82 in a direction away from the first piston 6 and with an end portion 84 into the first control chamber 16. Both the first piston 6 and a second portion 86 of the piston rod 10 are connected to the end portion 84. The first portion 80 together with the second piston 8, the second portion 86 and the first piston 6 thus form a unit. The second portion 86 in turn projects in a direction away from the second piston 8 equally out of the casing 12 with an end portion 88.

At its respective end sides the tubular casing 12 is closed by annular covers 90 and 92, resp. The piston rod 10 penetrates the latter, the piston rod 10 being slidably supported in the covers 90 and 92. The casing 12 exhibits approximately centrally an annular bar 94 which, on the one hand, serves as sliding bearing for the piston rod 10 and, on the other hand, separates the cylinder chambers 16 and 18 from each other. The casing 12 furthermore includes four radial bores 96 to 102 serving as ports for the pressure lines of Figure 1.

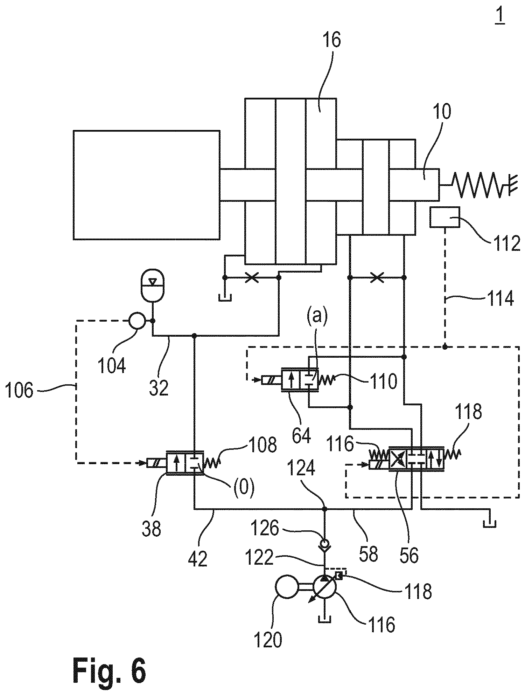

In accordance with Figure 6, the hydraulic drive 1 is shown in a second embodiment. In contrast to the first embodiment, a pressure gauge 104 is connected to the pressure line 32 for determining the pressure of the first control chamber 16. In response to said pressure then the directional control valve 38 is controlled which is schematically represented by the signal line 106. According to Figure 6, the directional control valve 38 additionally includes a valve spring 108 by which a spring force is applied to the valve slide of the directional control valve 38 in the direction of its closed position 0.

In Figure 6 the interconnection valve 64 is configured to be continuously variable in contrast to Figure 1 and equally includes a valve spring 110 which applies a spring force to the valve slide of the directional control valve 64 in the direction of the shift positions a. The displacement path of the piston rod 10 is detected by a travel sensor 112, wherein both the interconnection valve 64 and the control valve 56 are adapted to be controlled in response to the detected displacement path, schematically represented by the signal line 140 in Figure 6.

In contrast to Figure 1, the control valve according to Figure 6 includes two valve springs 116 and 118 via which the valve slide of the control valve 56 is spring-centered.

According to Figure 6, a variable hydraulic pump 116 is used as high-pressure pump. It includes a pressure regulator 118. The variable hydraulic pump 116 is driven by a drive unit 120. A pump line 122 connected to the pump branches into the pump line 42 and the pump line 58, the pump line 42 being connected to the directional control valve 38 and the pump line 58 being connected to the control valve 56. Upstream of the line branching 124, i.e. between the latter and the hydraulic pump 116, a check valve 126 is provided for sustaining the load. It opens in a pressure medium flow direction away from the hydraulic pump 116.

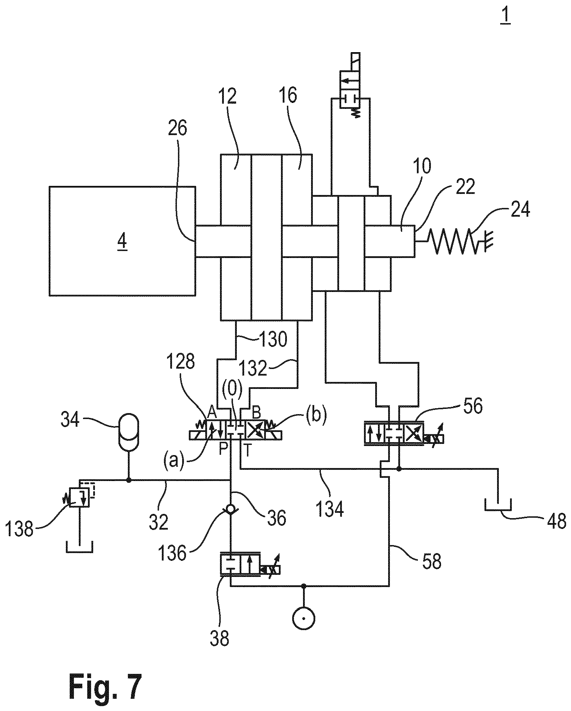

According to Figure 7, in a further embodiment of the hydraulic drive 1 a further control valve 128 is provided apart from the control valve 56. The control valve 128 includes two operating ports A and B, a pressure line 130 being connected to the operating port A and a pressure line 132 being connected to the operating port B. The pressure line 130 is connected to the second cylinder chamber 12 and the pressure line 132 is connected to the first cylinder chamber 16. Furthermore, the control valve 128 includes a pressure port P to which the hydraulic reservoir 34 is connected by the pressure line 32 and a tank port T to which a tank line 134 opening into the tank 48 is connected. In accordance with Figure 1, the branch line 36 which is connected to the directional control valve 38 branches off the pressure line 32. Advantageously, by the control valve 128 either the first control chamber 16 corresponding to the embodiment of Figure 1 can be connected to the directional control valve 38 or the second control chamber can be connected to the directional control valve 38. The respective other control chamber 12 or 16 then is in pressure medium communication with the tank 48. This results in the fact that the static load can be applied to the component part 4 in both axial directions of the piston rod 10. Thus the static load and the dynamic load could be applied to the component part 4 via the end face 22 of the piston rod 10. Then the valve spring 24 would act on the respective other end face 26.

The control valve 128 is a 4/3 directional control valve. The valve slide thereof shuts off the pressure medium communication between the ports A, B, P and T at a spring-centered central position 0. At a first shift position a of the valve slide the operating port A is connected to the pressure port P and the operating port B is connected to the tank port T, thus the second control chamber being connected to the directional control valve 38 and the first control chamber 16 being connected to the tank 48. At a second shift position b of the valve slide, on the other hand, the operating port A is connected to the tank port T and the operating port B is connected to the pressure port P, thus the first control chamber 16 being connected to the directional control valve 38 and the second control chamber 12 being connected to the tank 48.

Moreover, in the branch line 36 the hydraulic drive 1 according to Figure 7 includes a check valve 136 opening in a pressure medium flow direction away from the directional control valve 38 to sustain the load. For example, it is imaginable to provide in addition a check valve in the pump line 58. For pressure protection of the hydraulic reservoir 34 and the control chambers 12 and 16 a pressure limiting valve 138 connected to the pressure line 32 is provided.

The invention discloses a hydraulic drive for load and/or material fatigue tests. The hydraulic drive comprises a double cylinder including two pistons connected via a piston rod. A static load can be sustained via the first piston and a dynamic load can be controlled by the second piston.

List of reference numerals:

| | |
|---|---|
| 1 | Hydraulic drive |
| 2 | double cylinder |
| 4 | component part |
| 6 | first piston |
| 8 | second piston |
| 10 | piston rod |
| 12 | casing |
| 14 | second control chamber |
| 16 | first control chamber |
| 18 | first control chamber |
| 20 | second control chamber |
| 22 | end face |
| 24 | valve spring |
| 26 | end face |
| 28 | partial control |
| 30 | partial control |
| 32 | pressure line |
| 34 | hydraulic reservoir |
| 36 | branch line |
| 38 | directional control valve |
| 40 | hydraulic machine |
| 42 | pump line |
| 44 | actuator |
| 46 | tank line |
| 48 | tank |
| 50 | tank line |
| 52 | pressure line |
| 54 | pressure line |
| 56 | control valve |
| 58 | pump line |
| 60 | tank line |
| 62 | actuator |
| 64 | interconnection valve |
| 66 | connecting line |
| 68 | connecting line |
| 70 | actuator |
| 72 | curve |
| 74 | curve |
| 76 | curve |
| 78 | curve |
| 80 | first portion |
| 82 | end portion |
| 84 | end portion |
| 86 | second portion |
| 88 | end portion |
| 90 | cover |
| 92 | cover |
| 94 | bar |
| 96 | radial bore |
| 98 | radial bore |
| 100 | radial bore |
| 102 | radial bore |
| 104 | pressure gauge |
| 106 | signal line |
| 108 | valve spring |
| 110 | valve spring |
| 112 | travel sensor |
| 114 | signal line |
| 116 | hydraulic pump |
| 118 | pressure regulator |
| 120 | drive unit |
| 122 | pump line |
| 124 | line branching |
| 126 | check valve |
| 128 | control valve |
| 130 | pressure line |
| 132 | pressure line |
| 134 | tank line |
| 136 | check valve |
| A, B | operating port |
| P | pressure port |
| T | tank port |

**Claims**

1. A hydraulic drive for fatigue tests comprising a multiple cylinder (2) including two pistons (6, 8) substantially arranged in parallel and fixedly connected to each other, the first piston (6) being controlled by a first hydraulic partial control (28) and the second piston (8) being controlled by a second hydraulic partial control (30), the first partial control (28) sustaining a static load and the second partial control (30) controlling a dynamic load, wherein a respective piston (6, 8) delimits two cylinder chambers (14, 16; 18, 20), the first cylinder chamber (16) delimited by the first piston (6) adapted to be connected to a high-pressure source (40) of the hydraulic drive for sustaining the static load by the first partial control (28) and the cylinder chambers (18, 20) delimited by the second piston (8) being adapted to be alternately connected to the said or a further high-pressure source (40) of the hydraulic drive and a pressure medium sink (48) of the hydraulic drive for controlling the dynamic load by the second partial control (30), wherein the second partial control (30) includes a control valve (56) by which the cylinder chambers (18, 20) delimited by the second piston (8) are alternately connected to the high-pressure source (40) or the pressure medium sink (48), and the first partial control (28) including a directional control valve (38) for connecting the first cylinder chamber (16) delimited by the first piston (6) to the high-pressure source (40), **characterized in that** the directional control valve (38) is in the form of a 2/2 continuously variable directional control valve (proportional valve) and includes an operating port (A) and a pressure port (P), a valve slide separating the ports (A, P) from each other at a closed position and interconnecting them at opening positions.

2. The hydraulic drive according to claim 1, wherein the piston (6) for sustaining the static load has a larger diameter than the piston (8) used for the dynamic load.

3. The hydraulic drive according to claim 1 or 2, wherein the first cylinder chamber (16) delimited by the first piston (6) is connected to a hydraulic reservoir (34) of the hydraulic drive.

4. The hydraulic drive according to any one of the preceding claims, wherein the pistons (6, 8) are arranged on a joint piston rod (10) by which force can be applied to an object to be tested.

5. The hydraulic drive according to claim 1, wherein the control valve (56) includes two operating ports (A, B) connected to a respective cylinder chamber (18, 20) delimited by the second piston (8), a pressure port (P) and a tank port (T), at first shift positions of a valve slide of the control valve (56) the first operating port (A) being connected to the pressure port (P) and the second operating port (B) being connected to the tank port (T) and at second shift positions the first operating port (A) being connected to the tank port (T) and the second operating port (B) being connected to the pressure port (P).

6. The hydraulic drive according to any one of the claims 1 to 5, wherein the cylinder chambers (18, 20) delimited by the second piston (8) are adapted to be interconnected via an interconnection valve (64).

7. The hydraulic drive according to any one of the preceding claims, wherein the high-pressure source (40) is a hydraulic machine in the form of a hydraulic pump (40; 116).

8. The hydraulic drive according to claim 1 or any one of the claims 5 to 7, wherein the control valve (56) is controlled by a controller that effects force feedback control and/or pressure feedback control and/or path feedback control of the multiple cylinder (2).

9. A method of controlling a hydraulic drive according to any one of the claims 1 to 8 comprising the steps of:

- Applying pressure medium to the first piston (6) to produce and sustain the static load;
- Applying pressure medium to the second piston (8) alternately in opposite directions so that a dynamic load can be generated by the same.

**Patentansprüche**

1. Hydraulischer Antrieb für Ermüdungstests mit einem Mehrfachzylinder (2), der zwei im Wesentlichen parallel zueinander angeordnete und fest miteinander verbundene Kolben (6, 8) aufweist, wobei der erste Kolben (6) über eine erste hydraulische Teilsteuerung (28) und der zweite Kolben (8) über eine zweite hydraulische Teilsteuerung (30) gesteuert ist, wobei die erste Teilsteuerung (28) eine statische Last aufrechterhält und die zweite Teilsteuerung (30) eine dynamische Last steuert, wobei ein jeweiliger Kolben (6, 8) zwei Zylinderkammern (14, 16; 18, 20) begrenzt, wobei die erste vom ersten Kolben (6) begrenzte Zylinderkammer (16) zur Aufrechterhaltung der statischen Last durch die erste Teilsteuerung (28) zur Verbindung mit einer Hochdruckquelle (40) des hydraulischen Antriebs ausgelegt ist, und wobei die vom zweiten Kolben (8) begrenzten Zylinderkammern (18, 20) zur Steuerung der dynamischen Last durch die zweite Teilsteuerung (30) zur wechselweisen Verbindung mit der oder einer weiteren Hochdruckquelle (40) des hydraulischen Antriebs und einer Druckmittelsenke (48) des hydraulischen Antriebs ausgelegt sind, wobei die zweite Teilsteuerung (30) ein Steuerventil (56) umfasst, mit dem die vom zweiten Kolben (8) begrenzten Zylinderkammern (18, 20) wahlweise mit der Hochdruckquelle (40) oder der Druckmittelsenke (48) verbunden sind, und die erste Teilsteuerung (28) umfasst ein Wegeventil (38) zur Verbindung der ersten vom ersten Kolben (6) begrenzte Zylinderkammer (16) mit der Hochdruckquelle (40), **dadurch gekennzeichnet, dass** das Wegeventil (38) als stetig verstellbares 2/2-Wegeventil (proportionales Ventil) ausgebildet ist und einen Arbeitsanschluss (A) und einen Druckanschluss (P) aufweist, wobei ein Ventilschieber in einer Schließstellung die Anschlüsse (A, P) voneinander trennt und in Öffnungsstellungen miteinander verbindet.

2. Hydraulischer Antrieb nach Anspruch 1, wobei der Kolben (6) zur Aufrechterhaltung der statischen Last einen größeren Durchmesser als der für die dynamische Last eingesetzte Kolben (8) aufweist.

3. Hydraulischer Antrieb nach Anspruch 1 oder 2, wobei die erste vom ersten Kolben (6) begrenzte Zylinderkammer (16) mit einem Hydrospeicher (34) des hydraulischen Antriebs verbunden ist.

4. Hydraulischer Antrieb nach einem der vorhergehenden Ansprüche, wobei die Kolben (6, 8) auf einer gemeinsamen Kolbenstange (10) angeordnet sind, über die ein zu prüfender Gegenstand mit Kraft beaufschlagbar ist.

5. Hydraulischer Antrieb nach Anspruch 1, wobei das Steuerventil (56) zwei jeweils mit einer jeweiligen vom zweiten Kolben (8) begrenzten Zylinderkammer (18, 20) verbundene Arbeitsanschlüsse (A, B), einen Druckanschluss (P) und einen Tankanschluss (T) aufweist, wobei in ersten Schaltstellungen eines Ventilschiebers des Steuerventils (56) der erste Arbeitsanschluss (A) mit dem Druckanschluss (P) und der zweite Arbeitsanschluss (B) mit dem Tankanschluss (T) und in zweiten Schaltstellungen der erste Arbeitsanschluss (A) mit dem Tankanschluss (T) und der zweite Arbeitsanschluss (B) mit dem Druckanschluss (P) verbunden ist.

6. Hydraulischer Antrieb nach einem der Ansprüche 1 bis 5, wobei die vom zweiten Kolben (8) begrenzten Zylinderkammern (18, 20) über ein Verbindungsventil (64) zur Verbindung miteinander ausgelegt sind.

7. Hydraulischer Antrieb nach einem der vorhergehenden Ansprüche, wobei die Hochdruckquelle (40) eine Hydromaschine in Form einer Hydropumpe (40; 116) ist.

8. Hydraulischer Antrieb nach Anspruch 1 oder nach einem der Ansprüche 5 bis 7, wobei das Steuerventil (56) von einem Steuergerät gesteuert wird, das eine Regelung mit Kraftrückkopplung und/oder Druckrückkopplung und/oder Wegrückkopplung des Mehrfachzylinders (2) bewirkt.

9. Verfahren zum Steuern eines hydraulischen Antriebs gemäß einem der Ansprüche 1 bis 8 mit den Schritten:

   - Beaufschlagen des ersten Kolbens (6) mit Druckmittel zur Herstellung und Aufrechterhaltung der statischen Last;
   - Beaufschlagen des zweite Kolbens (8) wechselweise in entgegengesetzte Richtungen mit Druckmittel derart, dass über diesen eine dynamische Last generiert werden kann.

**Revendications**

1. Entraînement hydraulique pour tests de fatigue comprenant un cylindre multiple (2) incluant deux pistons (6, 8) agencés sensiblement en parallèle et raccordés de manière fixe l'un à l'autre, le premier piston (6) étant commandé par une première commande hydraulique partielle (28) et le second piston (8) étant commandé par une seconde commande hydraulique partielle (30), la première commande partielle (28) soutenant une charge statique et la seconde commande partielle (30) commandant une charge dynamique, dans lequel un piston respectif (6, 8) délimite deux chambres de cylindre (14, 16 ; 18, 20), la première chambre de cylindre (16) étant délimitée par le premier piston (6) qui est à même d'être raccordé à une source de pression élevée (40) de l'entraînement hydraulique pour soutenir le charge statique par la première commande partielle (28) et les chambres de cylindre (18, 20) étant délimitées par le second piston (8) qui est à même d'être raccordé en alternance à ladite source de pression élevée ou à une autre source de pression élevée (40) de l'entraînement hydraulique et à un puits de milieu de pression (48) de l'entraînement hydraulique pour commander la charge dynamique par la seconde commande partielle (30), dans lequel la seconde commande partielle (30) inclut une vanne de commande (56) par laquelle les chambres de cylindre (18, 20) délimitées par le second piston (8) sont raccordées en alternance à la source de pression élevée (40) ou au puits de milieu de pression (48), et la première commande partielle (28) incluant une vanne de commande directionnelle (38) pour raccorder la première chambre de cylindre (16) délimitée par le premier piston (6) à la source de pression élevée (40), **caractérisée en ce que** la vanne de commande directionnelle (38) se présente sous la forme d'une vanne de commande directionnelle variable en continu 2/2 (vanne proportionnelle) et inclut un orifice de service (A) et un orifice de pression (P), un tiroir de vanne séparant les orifices (A, P) l'un de l'autre en position fermée et les interconnectant dans des positions d'ouverture.

2. Entraînement hydraulique selon la revendication 1, dans lequel le piston (6) pour soutenir la charge statique a un diamètre plus grand que le piston (8) utilisé pour la charge dynamique.

3. Entraînement hydraulique selon la revendication 1 ou 2, dans lequel la première chambre de cylindre (16) délimitée par le premier piston (6) est raccordée à un réservoir hydraulique (34) de l'entraînement hydraulique.

4. Entraînement hydraulique selon l'une quelconque des revendications précédentes, dans lequel les pistons (6, 8) sont agencés sur une tige de piston conjointe (10) par laquelle une force peut être appliquée à un objet à tester.

5. Entraînement hydraulique selon la revendication 1, dans lequel la vanne de commande (56) inclut deux orifices de service (A, B) raccordés à une chambre de cylindre respective (18, 20) délimitée par le second piston (8), un orifice de pression (P) et un orifice de réservoir (T), dans des premières positions de déplacement d'un tiroir de la vanne de commande (56), le premier orifice de service (A) étant raccordé à l'orifice de pression (P) et le second orifice de service (B) étant raccordé à l'orifice de réservoir (T) et, dans des secondes positions de déplacement, le premier orifice de service (A) étant raccordé à l'orifice de réservoir (T) et le second orifice de service (B) étant raccordé à l'orifice de pression (P).

6. Entraînement hydraulique selon l'une quelconque des revendications 1 à 5, dans lequel les chambres de cylindre (18, 20) délimitées par le second piston (8) sont à même d'être interconnectées via une vanne d'interconnexion (64).

7. Entraînement hydraulique selon l'une quelconque des revendications précédentes, dans lequel la source de pression élevée (40) est une machine hydraulique sous la forme d'une pompe hydraulique (40 ; 116).

8. Entraînement hydraulique selon la revendication 1 ou selon l'une quelconque des revendications 5 à 7 dans lequel la vanne de commande (56) est commandée par un dispositif de commande qui assure une commande de rétroaction de force et/ou une commande de rétroaction de pression et/ou une commande de rétroaction de trajet du cylindre multiple (2).

9. Procédé de commande d'un entraînement hydraulique selon l'une quelconque des revendications 1 à 8, comprenant les étapes consistant à :

     - appliquer un milieu de pression au premier piston (6) pour produire et soutenir la charge statique ;
     - appliquer un milieu de pression au second piston (8) en alternance dans des sens opposés de sorte qu'une charge dynamique puisse être générée par celui-ci.

1

Fig. 1

**Fig. 2**

**Fig. 3**

Fig. 4

**Fig. 5**

**Fig. 6**



**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3731592 A
- US 5435228 A
- CN 202486004 U